Europäisches Patentamt

European Patent Office

Office européen des brevets

(11) Publication number: **0 220 514**
**B1**

# EUROPEAN PATENT SPECIFICATION

(45) Date of publication of patent specification: 02.05.90

(21) Application number: **86113368.4**

(22) Date of filing: **29.09.86**

(51) Int. Cl.⁵: **A 01 N 49/00** // (A01N49/00, 33:12)

(54) Composition for increasing the quantity and quality of fruits and flowers of plants.

(30) Priority: 30.09.85 JP 214477/85

(43) Date of publication of application:
06.05.87 Bulletin 87/19

(45) Publication of the grant of the patent:
02.05.90 Bulletin 90/18

(84) Designated Contracting States:
DE FR GB IT

(56) References cited:
GB-A-2 059 412
US-A-4 346 226

(73) Proprietor: MITSUBISHI GAS CHEMICAL COMPANY, INC.
5-2, Marunouchi 2-chome Chiyoda-Ku
Tokyo, 100 (JP)

(72) Inventor: Kajita, Toshio
13-13-9, Yachiyodai Kita
Yachiyo-shi Chiba-ken (JP)
Inventor: Furushima, Masakazu
134-165, Kita
Nagareyama-shi Chiba-ken (JP)
Inventor: Takematsu, Tesuo
612, Mine-machi
Utsunomiya-shi Tochigi-ken (JP)

(74) Representative: Kraus, Walter, Dr. et al
Patentanwälte Kraus, Weisert & Partner
Thomas-Wimmer-Ring 15
D-8000 München 22 (DE)

Courier Press, Leamington Spa, England.

**Description**

This invention relates to a composition and a method for increasing the quantity, and/or improving the quality, of fruits and flowers of plants in horticulture and agriculture.

Five types of compounds, auxins, gibberellins, cytokinins, abscisic acids and ethylenes, have previously been known as substances considered to be phytohormones. The gibberellins have practical effects and are used actually in crop cultivation as a plant growth promotor; the auxins such as indoleacetic acid and alpha-naphthaleneacetic acid, as a plant root growth promoter; and the cytokinins such as kinetin (6-furfurylaminopurine) and benzyladenine, as a plant aging inhibitor.

Recently, brassinolide, a kind of steroid, was isolated from an extract of the pollen of *Brassica napas* as a new phytohormone, and its chemical structure was determined [see Michael D. Grove et al., Nature, *281*, 20 Sept. pp. 216—217, (1979)]. Since then, ten and several brassinolide-like steroids having biological activity on plants have been found in various plants, but their possibility of utilization in an agricultural field is still on the stage of research and experiment.

On the other hand, choline salts, a group of vitamin B compounds, have been widely used as animal feed additives. U.S. Patent No. 4,309,205 recently disclosed that non-toxic choline salts enhance the reproductive development of plants. Their enhancing effect, however, is not entirely satisfactory for practical purposes.

It has now been found in accordance with this invention that a combination of a 24-epibrassinolide and a choline salt shows a synergistically high effect for increasing the quantity, and/or improving the quality, of fruits or flowers of plants as compared with the use of the individual components of the combination.

The present invention provides a composition suitable for increasing the quantity and quality of fruits or flowers of plants in horticulture and agriculture, which comprises

(A) at least one 24-epibrassinolide, and

(B) at least one non-toxic salt of choline.

The 24-epibrassinolide used as one active ingredient in the composition of this invention includes (22R,23R,24R)-2α,3α,22,23-tetrahydroxy-24-methyl-B-homo-7-oxa-5α-cholestan-6-one (to be sometimes abbreviated hereinafter as "22R,23R-Epi BR"), and (22S,23S,24R)-2α,3α,22,23-tetrahydroxy-24-methyl-B-homo-7-oxa-5α-cholestan-6-one (to be sometimes abbreviated hereinafter as "22S,23S-Epi BR"). They may be used either singly or in combination. These 24-epibrassinolides are known compounds and can be synthesized, for example, by the methods described in M. J. Thompson et al., J. Org. Chem. *44*, 5002 (1979); Steroids *39*, 89 (1982); and K. Mori et al., Agricultural Biological Chemistry, *44* (5), 1211—1212 (1980), ibid., *47*, 663 (1983), ibid., *47*, 925 (1983).

The non-toxic choline salt, the other active ingredient used in combination with the 24-epibrassinolide in the composition of this invention, includes organic or inorganic salts of choline which are not phytotoxic, nor toxic to humans and animals in the concentrations in which they are used. Specific examples include inorganic salts of choline, such as choline hydrochloride, dihydrogen phosphate, polyphosphate, sulfate, nitrate, silicate or carbonate; and organic salts of choline such as choline acetate, dihydrogen citrate, lactate or hydrogen L(+)-tartrate. These salts may be used singly or in combination.

The composition of this invention may be formulated into any desired form such as a dust, granules, a wettable powder, a solution, a suspension, an emulsifiable concentrate and an aerosol according to the method of applying the composition. The composition may be formulated by procedures known *per se* in the art. For example, the dust, granules or wettable powder can be prepared by mixing and pulverizing at least one 24-epibrassinolide, at least one choline salt and at least one solid carrier or diluent of the types described above, adding a suitable amount of a surface-active agent, and mixing them uniformly. The solution, suspension or emulsifiable concentrate may be prepared by dissolving or dispersing at least one 24-epibrassinolide and at least one choline salt in at least one liquid carrier or diluent, and if desired, adding a suitable surface-active agent.

The agronomically acceptable carrier or diluent means any substance which can be used to dissolve, disperse or diffuse the active components in the composition without impairing their effect of increasing the quantity and/or quality of fruits or flowers of plants, and which by itself has no detrimental effect on the soil, equipment, crops, or an agronomic environment.

Example of solid carriers useful in the composition of this invention include vegetable powders (e.g., starch, and acacia), mineral powders, clay minerals (e.g., kaolinite group, and montmorillonite group), talc, pyrophilite, vermiculite, calcite, gypsum, silica gel, mica group, dolomite, magnesite, kieselguhr, slaked lime, pumice, sulfur, inorganic salts (e.g., calcium carbonate), and synthetic polymers (e.g., phenolic resin or urea resin). Examples of liquid carriers or solvents which are useful in the composition of this invention include water, alcohols (e.g., methanol, ethanol, propanol or ethylene glycol), ketones (e.g., acetone, methyl ethyl ketone or methyl isobutyl ketone), amides (e.g. N,N-dimethylformamide or N,N-dimethylacetamide), and sulfoxides (e.g., dimethyl sulfoxide).

Suitable emulsifiers include, for example, ethylene oxide derivatives of alkylphenols or long-chain alcohols, mercaptans, carboxylic acids, reactive amines, and partially esterified polyhydric alcohols. Solvent-soluble sulfates or sulfonates, such a alkaline earth metal salts or amine salts of alkylbenzenesulfonates and aliphatic alcohol sodium sulfates, having surface-active properties can be used as emulsifiers either singly or in combination with an ethylene oxide reaction product.

The composition of this invention comprises a mixture of 24-epibrassinolide and the choline salt in an amount effective for increasing the quantity and quality of fruits and flowers. The specific amount of the mixture may vary depending upon the form of the composition. Generally, the composition of the invention may contain at least 2% by weight, preferably 20 to 80% by weight, more preferably 30 to 50% by weight, of the mixture of the 24-epibrassinolide and the choline salt based on the weight of the composition.

The dust or granules may contain the mixture of the 24-epibrassinolide and choline salt in a concentration of 2 to 75% by weight based on the weight of the composition, and the wettable powder, solution, suspension or emulsifiable concentrate may contain 10 to 75% by weight of the mixture.

The composition of this invention may also contain a fungicide, a bactericide, an insecticide, an acaricide, a nematocide, a fertilizer, a herbicide and other plant growth regulating agents, which are usually employed in agriculture.

The proportions of the 24-epibrassinolide and the choline salt in the composition of this invention should not be limited to a narrow range, and may be varied over a broad range depending, for example, upon the type or the growth stage of a plant to which the composition is to be applied. Generally, the suitable weight ratio of the 24-epibrassinolide to the choline salt is from 1:100 to $1:10^{10}$, preferably from 1:1000 to $1:10^9$, more preferably from 1:3000 to $1:10^8$.

Preferred forms of the composition of this invention are a wettable powder and a dilute or concentrated aqueous solution or dispersion which are to be used by dilution with an aqueous medium.

The formulation containing the 24-epibrassinolide and the choline salt described above can be applied to plants after it is diluted with a suitable diluent such as water so that the concentration of the 24-epibrassinolide falls generally within the range of 0.001 ppb to 3 ppm, preferably within the range of 0.01 ppb to 1 ppm, and the concentration of the choline salt falls generally within the range of 5 to 3000 ppm, preferably within the range of 20 to 2000 ppm.

The following Formulation Examples illustrate the formulation of the composition of this invention.

Formulation Example 1

Wettable powder:—

| Ingredient | Parts by weight |
|---|---|
| 22S,23S-Epi Br | 0.01 |
| Choline dihydrogen phosphate | 30 |
| Sodium dodecylbenzenesulfonate | 5 |
| Polyoxyethylene alkylphenyl ether | 1 |
| Talc | 63.99 |

The above ingredients are uniformly mixed and pulverized in a mill. The resulting wettable powder can be used generally after diluting it with water to 10 to 200 times.

Formulation Example 2

Aqueous solution:—

| Ingredient | Parts by weight |
|---|---|
| 22S,23S-Epi BR | 0.001 |
| 75% aqueous solution of choline chloride | 32 |
| Polyoxyalkylaryl ether | 2 |
| Laurylmethyldihydroxyethyl ammonium chloride | 1 |
| i-Propyl alcohol | 33 |
| Water | 31.999 |

3

The above ingredients are uniformly mixed to form an aqueous solution.

The 24-epibrassinolide and choline salt in the composition of this invention may be taken into a plant from its roots or leaves by applying it through a soil treatment, for example adding the composition to irrigating water and directly applying it to the soil, or through a foliar treatment by directly spraying it to the plant's stalks and leaves.

Thus, according to this invention, there is also provided a method of increasing the quantity and quality of fruits or flowers of a plant in horticulture and agriculture, which comprises applying a fruit or flower quantity and quality improving effective amount of (A) at least one 24-epibrassinolide and (B) at least one non-toxic salt of choline to the plant or its cultivated area.

Application of the 24-epibrassinolide and choline salt to plants in accordance with this invention may usually be via seeds by immersion, the root system by irrigation, or foliage by spraying. The rates of application of the 24-epibrassinolide and choline salt can be varied widely depending upon the kind and growth stage of the plant, the formulation, etc. Generally, when the composition is applied via seeds by immersion or the root system by irrigation, the suitable concentrations of 24-epibrassinolide and the choline salt in an aqueous solution are 0.03 ppb to 0.1 ppm, and 10 to 1000 ppm, respectively, for rice seedlings, and 0.001 to 1 ppm and 50 to 300 ppm, respectively, for tomato. In the case of foliar application to rice, wheat and barley, the composition of this invention is sprayed after diluting it with 10 to 1000 liters/ha of water so as to provide a 24-epibrassinolide concentration of 0.1 ppb to 10 ppm and a choline salt concentration of 500 ppm to 1%. For foliar application to corn, the composition may be sprayed after being diluted to 10 to 1000 liters/ha of water so as to provide a 24-epibrassinolide concentration of 0.1 ppb to 0.01 ppm and a choline salt concentration of 1000 ppm to 1%.

There is no particular limitation on the time of applying the composition of this invention. It may be applied at any desired stage of plant growth whereby the growth of roots, stalks and leaves of plants can be promoted and the quantity and/or quality of flowers and fruits can be increased or improved. Especially preferably, the composition of this invention is applied to plants in their reproductive stage. The time of application at which the greatest effect can be obtained varies depending upon the kind of the plant, and any skilled person in the art can easily determine the best time by performing routine experiments for each of the plants to which the composition of this invention is to be applied. For example, to rice, barley and wheat, it is preferable to apply the composition of the invention during the time from about 40 days before the flowering time to 20 days after it, particularly from about 20 days before flowering to a time immediately after it.

The composition and method of this invention are applicable to a great variety of plants. Specific examples of such plants include cereal plants such as rice, wheat, barley, and corn; leguminous plants such as soybean; plants having underground tubers or bulbs such as onion, garlic and potato; vegetables grown for their edible roots such as beet and carrot; fruits such as peach, persimmon, grape and apple; vegetables grown for their edible fruits such as tomato and cucumber; vegetables grown for their edible leaves such as lettuce, cabbage, cauliflower and spinach; and flowers such as tulip and cosmos. In particular, the composition of this invention can be advantageous, for rice, wheat, corn and soybean. The composition of this invention achieves an especially good effect of wheat and rice.

According to the composition and method of this invention described above, the various excellent beneficial effects tabulated below can be obtained according to crops and the method of application.

| Crop | Method of application | Time of application | Rate of application of the choline salt | Rate of application of the 24-epibrassinolide | Expected effect |
|---|---|---|---|---|---|
| rice, wheat, barley | foliar | from 40 days before heading to 10 days after heading | 500–2000 g/ha | 0.01–1000 mg/ha | increased harvest |
| soybean (leguminous plants) | foliar | from 10 days before flowering to 20 days after flowering | 500–1000 g/ha | 0.1–1000 mg/ha | increased harvest (increased number of pods) |
| onion, garlic, tulip | foliar | early stage of bulb swelling | 500–2000 g/ha | 0.1–1000 mg/ha | bulb swelling |
| potato | foliar | early stage of tuber growth | 50–1500 g/ha | 10–1000 mg/ha | tuber growth and increased yield |
| peach, persimmon, grape, apple | foliar | flowering stage to 10 days before harvest | 25–2000 g/ha | 0.1–1000 mg/ha | size increase of fruits, increase of sweetness, maintenance of freshness |
| wheat, barley | foliar | 2- to 3-leaf stage | 50–1000 g/ha | 0.01–1000 mg/ha | growth promotion |

(continued)

| Crop | Method of application | Time of application | Rate of application of the choline salt | Rate of application of the 24-epibrassinolide | Expected effect |
|------|------|------|------|------|------|
| rice | seed treatment | immersed for 24 hours after immersion in water for 2 days | 50-1000 ppm | 0.001-1 ppm | promotion of growth and root formation |
| wheat, barley | seed treatment | immersed for 24 hours | 10-1000 ppm | 0.001-1 ppm | promotion of growth and root formation |
| tomato, lettuce | seed treatment | immersed for 24 hours | 1-300 ppm | 0.001-1 ppm | promotion of growth and root formation |
| rice seedling | irrigation | from the 2-leaf stage to the time before transplantation | 5-500 mg/1800 cm$^2$ (10-1000 ppm) | 0.0005-0.05 mg/1800 cm$^2$ (0.0001-0.1 ppm) | promotion of growth and root formation |
| tomato seedling | irrigation | seedling stage | 1-100 mg/seedling (10-1000 ppm) | 0.0001-0.01 mg/seedling (0.0001-0.1 ppm) | growth promotion |

The following Test Examples specifically illustrate the excellent beneficial effects of the composition of this invention.

### Test Example 1

Test on rice in Petri dishes:—

In each run, 10 ml of aqueous solution containing 22S,22S-Epi BR (diluted from 1% wettable powder) and/or choline chloride (to be referred to as "CC") in each of the concentrations indicated in Table 1 was added to a deep Petri dish having a diameter of 9 cm, and ten rice seeds (variety: "nihonbare") immediately after emergence were sown in it. The Petri dish wsa put in a phytotron kept at 25°C, and the rice was cultivated while occasionally supplying water in an amount corresponding to the consumed water. Twelve

6

days later, the length of the root and the length of the overground portion were measured, and the results are shown in Table 1.

### Table 1

| Chemical and concentration (ppm) | Ratio to the untreated | Length of the root |
|---|---|---|
| Untreated | 100 | 100 |
| 22S,23S-Epi BR (0.03) | 106 | 113 |
| " (0.1) | 107 | 121 |
| CC (50) | 105 | 124 |
| " (100) | 107 | 121 |
| 22S,23S-Epi BR (0.03) + CC (50) | 111 | 155 |
| " (0.03) + CC (100) | 113 | 156 |
| " (0.1) + CC (50) | 112 | 140 |
| " (0.1) + CC (100) | 115 | 143 |

### Test Example 2

Test in a wheat field:—

On October 28, autumn-sowing wheat (variety: "norin #61") was sown in a field in Utsunomiya-City, Tochigi-ken, Japan. In the heading stage (April 27), an aqueous solution containing 22R,22R-Epi BR (diluted from 1% wettable powder) and/or CC in each of the concentrations indicated in Table 2 was applied uniformly once to foliage at a rate of 10 liters/are by a sprayer. Water was sprayed at a rate of 10 liters/are to an untreated area. On June 15, the wheat was harvested, and the yield (the amount of fruits) was measured. The results are shown in Table 2. The experiments were carried out through three replications for each area.

### Table 2

| Chemical and concentration (ppm) | Average yield (ratio to the untreated area) |
|---|---|
| Untreated area | 100 (5210 kg/ha) |
| 22S,23S-Epi BR (0.001) | 110 |
| " (0.01) | 113 |
| CC (500) | 108 |
| " (1000) | 110 |
| 22R,23R-Epi BR (0.001) + CC (500) | 122 |
| " (0.001) + CC (1000) | 135 |
| " (0.01 + CC (500) | 123 |
| " (0.01) + CC (1000) | 125 |

### Test Example 3

Test on rice in pots:—

Rice (variety: "nihonbare") was cultivated outdoors in Wagner pots (1/5000 are), and in the heading stage (July 30), an aqueous solution containing 22R,22R-Epi BR (diluted from 1% wettable powder) and/or CC was sprayed uniformly to foilage at a rate of 5 ml/pot by a sprayer. On September 24, the rice was harvested and the yield (the amount of hulled rice) was measured (4 pots constituted one area). The results are shown in Table 3.

### Table 3

| Chemical and concentration (ppm) | Amount of hulled rice (ratio to the untreated area) |
|---|---|
| Untreated area | 100 (29 g/pot) |
| 22R,23R-Epi BR (0.003) | 104 |
| " (0.01) | 106 |
| CC (300) | 100 |
| " (1000) | 102 |
| 22R,23R-Epi BR (0.003) + CC (300) | 113 |
| " (0.003) + CC (1000) | 114 |
| " (0.01 + CC (300) | 115 |
| " (0.01) + CC (1000) | 116 |

### Test Example 4

Test on growth of corn:—

Corn (dent corn) was grown to the 2-leaf stage in a 1-liter plastic pot. An aqueous solution containing 22R,23R-Epi BR or 22S,22S-Epi BR (diluted from 1% wettable powder) and/or CC in each of the concentrations shown in Table 4 was uniformly sprayed onto the corn by a sprayer. Thereafter, the corn was cultivated in a glass greenhouse. Twenty-five days after the spraying, the overground portion of the corn was reaped, and its dry weight was measured. The results are shown in Table 4.

### Table 4

| Chemical and concentration (ppm) | Dry weight of the over-ground portion (ratio to the untreated area) |
|---|---|
| Untreated area | 100 (2.0 g/for each corn |
| 22S,23S-Epi BR (0.01) | 105 |
| " (0.1) | 100 |
| 22R,23R-Epi BR (0.01) | 110 |
| " (0.1) | 107 |
| CC (300) | 120 |
| " (1000) | 124 |
| 22S,23S-Epi BR (0.01) + CC (300) | 158 |
| " (0.01) + CC (1000) | 160 |
| 22R,22R-Epi BR (0.01) + CC (300) | 139 |
| " (0.01) + CC (1000) | 148 |

Test Example 5

Test on soybean in a field:—

Soybean (variety: "tachisuzunari") was sown in a field in Utsunomiya-City, Tochigi-ken, Japan on June 26. On August 19 which was 10 days after the beginning of flowering, an aqueous solution containing a 1:1 mixture of 22S,23S-Epi BR and 22R,23R-Epi BR and/or choline phosphate (to be referred to as CP) in each of the concentrations indicated in Table 5 was sprayed to foliage at a rate of 10 liters/are. Water was sprayed to a non-treated area at a rate of 10 liters/are. On October 12, the soybean was harvested. The amount of 100 soybeans and the amount of fruits were measured. The results are shown in Table 5.

## Table 5

| Chemical and concentration (ppm) | Amount of 100 beans (ratio to the untreated area) | Amount of fruits (ratio to the untreated area) |
|---|---|---|
| Untreated area | 100 (23.6g) | 100 (3450kg/ha) |
| 22S,23S-Epi BR +22R,23R-Epi BR(1:1) (0.01) | 100 | 107 |
| " (0.03) | 101 | 105 |
| " (0.1) | 102 | 108 |
| CP (1000) | 98 | 110 |
| 22S,23S-Epi BR +22R,23R-Epi BR(1:1) (0.01)+CP(1000) | 102 | 124 |
| " (0.03)+CP(1000) | 100 | 133 |
| " (0.1) +CP(1000) | 99 . | 127 |

## Claims

1. A composition suitable for increasing the quantity and quality of fruits or flowers of plants in horticulture and agriculture, which comprises
   (A) at least one 24-epibrassinolide, and
   (B) at least one non-toxic salt of choline.

2. The composition of claim 1 wherein the weight ratio of the 24-epibrassinolide to the choline salt is from 1:100 to $1:10^{10}$.

3. The composition of claim 2 wherein the weight ratio of the 24-epibrassinolide to the choline salt is from 1:1000 to $1:10^9$.

4. The composition of claim 1 wherein the 24-epibrassinolide is selected from (22R,23R,24R)-2α,3α,22,23-tetrahydroxy-24-methyl-B-homo-7-oxa-5α-cholestan-6-one and (22S,23S,24R)-2α,3α,22,23-tetrahydroxy-24-methyl-B-homo-7-oxa-5α-cholestan-6-one.

5. The composition of claim 1 wherein the non-toxic salt of choline is selected from choline hydrochloride, dihydrogen, phosphate, polyphosphate, sulfate, nitrate, silicate, hydrogen carbonate, acetate, dihydrogen citrate, lactate and hydrogen L(+)-tartrate.

6. The composition of claim 1 which contains 20 to 80% by weight, based on the weight of the composition, of the mixture of (A) at least one 24-epibrassinolide and (B) at least one non-toxic salt of choline, and an agronomically acceptable carrier or diluent.

7. The composition of claim 6 which is in the form of a wettable powder, an emulsifiable concentrate, a dust, granules, an aerosol or a flowable emulsifiable concentrate.

8. The composition of claim 7 which is in the form of a wettable powder, or a dilute or concentrated aqueous solution or dispersion.

9. A method of increasing the quantity and quality of fruits or flowers of a plant in horticulture and agriculture, which comprises applying a fruit or flower quantity and quality improving effective amount of (A) at least one 24-epibrassinolide and (B) at least one non-toxic salt of choline to the plant or its cultivated area.

10. The method of claim 9 wherein the 24-epibrassinolide and the choline salt are applied to the plant via the root system by irrigation or foliage by spraying.

11. The method of claim 9 wherein the 24-epibrassinolide and the choline salt are sprayed to the foliage of the plant at a rate of 0.01 to 1000 mg/ha and 25 to 2000 g/ha, respectively.

12. The method of claim 9 wherein an aqueous solution containing 10 to 1000 ppm of the choline salt and 0.03 ppb to 0.1 ppm of 24-epibrassinolide is applied to seeds of rice by immersion or to the root system of rice by irrigation.

13. The method of claim 9 wherein an aqueous solution containing 50 to 300 ppm of the choline salt and 0.001 ppm to 1 ppm of 24-epibrassinolide is applied to seeds of tomato by immersion or to the root system of tomato by irrigation.

14. The method of claim 9 wherein the plant is selected from cereal plants of the group consisting of rice, wheat, barley and corn; soybean; beet; plant having underground tubers or bulbs of the group consisting of onion, garlic and potato; vegetables of the group consisting of tomato, cucumber, lettuce, cabbage, cauliflower, spinach and carrot; fruits of the group consisting of peach, persimmon, grape and apple; and flowers of the group consisting of tulip and cosmos.

15. The method of claim 9 wherein the plant is selected from rice, wheat, corn and soybean.

16. Use of a 24-epibrassinolide and a non-toxic salt of choline for increasing the quality and quantity of fruits and flowers of a plant in horticulture and agriculture.

**Patentansprüche**

1. Zusammensetzung, geeignet zur Erhöhung der Quantität und der Qualität von Pflanzenfrüchten oder -blüten im Gartenbau und in der Landwirtschaft, dadurch gekennzeichnet, daß sie
(A) mindestens ein 24-Epibrassinolid und
(B) mindestens ein nichttoxisches Cholinsalz enthält.

2. Zusammensetzung nach Anspruch 1, dadurch gekennzeichnet, daß das Gewichtsverhältnis des 24-Epibrassinolids zu dem Cholinsalz von 1:100 bis 1:10$^{10}$ beträgt.

3. Zusammensetzung nach Anspruch 2, dadurch gekennzeichnet, daß das Gewichtsverhältnis des 24-Epibrassinolids zu dem Cholinsalz von 1:1000 bis 1:10$^9$ beträgt.

4. Zusammensetzung nach Anspruch 1, dadurch gekennzeichnet, daß das 24-Epibrassinolid aus (22R,23R,24R)-2α3α,22,23-tetrahydroxy-24-methyl-B-homo-7-oxa-5α-cholestan-6-on und (22S,23S,24R)-2α,3α,22,23-tetrahydroxy-24-methyl-B-homo-7-oxa-5α-cholestan-6-on ausgewählt wird.

5. Zusammensetzung nach Anspruch 1, dadurch gekennzeichnet, daß das nichttoxische Cholinsalz aus Cholinhydrochlorid, -dihydrogenphosphat, -polyphosphat, -sulfat, -nitrat, -silicat, -hydrogencarbonat, -acetat, -dihydrogencitrat, -lactat und -hydrogen-L(+)-tartrat ausgewählt wird.

6. Zusammensetzung nach Anspruch 1, dadurch gekennzeichnet, daß sie 20 bis 80 Gew.-%, bezogen auf das Gewicht der Zusammensetzung, eines Gemisches aus (A) mindestens eines 24-Epibrassinolids und (B) mindestens eines nichttoxischen Cholinsalzes und einen agronomisch annehmbaren Träger oder Diluent enthält.

7. Zusammensetzung nach Anspruch 6, dadurch gekennzeichnet, daß sie in Form eines benetzbaren Pulvers, eines emulgierbaren Konzentrats, eines Zerstäubungsmittels, Granulats, eines Aerosols oder eines fließ-fähigen emulgierbaren Konzentrats vorliegt.

8. Zusammensetzung nach Anspruch 7, dadurch gekennzeichnet, daß sie in Form eines vernetzbaren Pulvers oder einer dünnflüssigen oder konzentrierten wäßrigen Lösung oder Dispersion vorliegt.

9. Verfahren zur Erhöhung der Quantität und der Qualität von Pflanzenfrüchten und -blüten im Gartenbau und in der Landwirtschaft, dadurch gekennzeichnet, daß eine zur Verbesserung der Quantität und Qualität einer Frucht oder Blüte wirksame Menge von (A) mindestens eines 24-Epibrassinolids und (B) mindestens eines nichttoxischen Cholinsalzes auf die Pflanze oder ihre Anbaufläche aufgebracht wird.

10. Verfahren nach Anspruch 9, dadurch gekennzeichnet, daß das 24-Epibrassinolid und das Cholinsalz auf die Pflanze über das Wurzelsystem durch Bewässerung oder auf die Blätter durch Sprayen aufgebracht werden.

11. Verfahren nach Anspruch 9, dadurch gekennzeichnet, daß das 24-Epibrassinolid und das Cholinsalz auf die Pflanzenblätter in einer Konzentration von jeweils 0,01 bis 1000 mg/ha und 25 bis 2000 g/ha gesprayt werden.

12. Verfahren nach Anspruch 9, dadurch gekennzeichnet, daß eine wäßrige Lösung mit 10 bis 1000 ppm des Cholinsalzes und 0,03 ppb bis 0,1 ppm des 24-Epibrassinolids auf Reissamen durch Immersion oder auf das Wurzelsystem von Reis durch Bewässerung aufgebracht wird.

13. Verfahren nach Anspruch 9, dadurch gekennzeichnet, daß eine wäßrige Lösung mit 50 bis 300 ppm des Cholinsalzes und 0,001 ppm bis 1 ppm des 24-Epibrassinolids auf Tomatensamen durch Immersion oder auf das Wurzelsystem von Tomaten durch Bewässerung aufgebracht wird.

14. Verfahren nach Anspruch 9, dadurch gekennzeichnet, daß die Pflanze aus Getreidepflanzen der Gruppe Reis, Weizen, Gerste und Mais; Sojabohne; Rüben; aus Pflanzen mit Untergrundknollen oder -zwiebeln der Gruppe Zwiebel, Knoblauch und Kartoffel; aus Gemüsepflanzen der Gruppe Tomate, Gurke, Kopfsalat, Kohl, Blumenkohl, Spinat und Karotte; aus Früchten der Gruppe Pfirsich, Persimone, Weintraube und Apfel; und aus Blumen der Gruppe Tulpe und Kosmosblume ausgewählt wird.

15. Verfahren nach Anspruch 9, dadurch gekennzeichnet, daß die Pflanze aus Reis, Weizen, Mais und Sojabohne ausgewählt wird.

16. Verwendung eines 24-Epibrassinolids und eines nichttoxischen Cholinsalzes zur Erhöhung der Qualität und Quantität von Pflanzenfrüchten und -blüten in Gartenbau und Landwirtschaft.

# EP 0 220 514 B1

**Revendications**

1. Une composition destinée à accroître la quantité et à améliorer la qualité de fruits ou de fleurs de plantes en horticulture et en agriculture, composition qui comprend:
   (A) un ou plusieurs 24-épi-brassinolides, et
   (B) un ou plusieurs sels non-toxiques de choline.

2. La composition selon la revendication 1 dans laquelle le rapport pondéral du 24-épi-brassinolide au sel de choline est compris entre 1:100 et 1:10$^{10}$.

3. La composition selon la revendication 2 dans laquelle le rapport pondéral du 24-épi-brassinolide au sel de choline est compris entre 1:1000 et 1:10$^9$.

4. La composition selon la revendication 1 dans laquelle le 24-épi-brassinolide est choisi parmi la (22R,23R,24R)-2α,3α,22,23-tétrahydroxy-24-méthyl-B-homo-7-oxa-5α-cholestane-6-one et la (22S,23S,24R)-2α,3α,22,23-tétrahydroxy-24-méthyl-B-homo-7-oxa-5α-cholestane-6-one.

5. La composition selon la revendication 1 dans laquelle le sel non-toxique de choline est choisi parmi le chlorhydrate, le dihydrogénophosphate, le polyphosphate, le sulfate, le nitrate, le silicate, l'hydrogéno-carbonate, l'acétate, le dihydrogéno-citrate, le lactate et l'hydrogéno-(L+)-tartrate de choline.

6. La composition selon la revendication 1 qui contient de 20 à 80% de son poids du mélange de (A) un ou plusieurs 24-épi-brassinolide et (B) un ou plusieurs sels non-toxiques de choline, avec un véhicule ou diluant pour un usage agronomique.

7. La composition selon la revendication 6 sous la forme d'une poudre mouillable à pulvériser, d'un concentré émulsionnable, d'une poudre à épandre, de granules, d'un aérosol ou d'un concentré émulsionnable coulable.

8. La composition selon la revendication 7 sous la forme d'une poudre mouillable, ou d'une solution ou dispersion aqueuse diluée ou concentrée.

9. Une méthodie pour accroître la quantité et améliorer la qualité de fruits ou fleurs de plantes en horticulture et en agriculture, méthode qui consiste à appliquer aux plantes ou aux zones cultivées une quantité, appropriée pour accroître la quantité et améliorer la qualité de fruits ou de fleurs, de (A) un ou plusieurs 24-épi-brassinolides et (B) un ou plusieurs sels non-toxiques de choline.

10. La méthode selon la revendication 9 dans laquelle le 24-épi-brassinolide et le sel de choline sont appliqués à la plante par les racines par arrosage, ou sur le feuillage par pulvérisation.

11. La méthode selon la revendication 9 dans laquelle le 24-épi-brassinolide et le sel de choline sont pulvérisés sur le feuillage aux taux respectifs de 0,01 à 1000 mg/ha et de 25 à 2000 g/ha.

12. La méthode selon la revendication 9 dans laquelle on applique une solution aqueuse de 10 à 1000 ppm du sel de choline et de 0,03 ppb à 0,1 ppm de 24-épi-brassinolide, soit à des graines de riz par immersion, soit aux racines du riz par arrosage.

13. La méthode selon la revendication 9 dans laquelle on applique une solution aqueuse de 50 à 300 ppm du sel de choline et de 0,001 ppm à 1 ppm de 24-épi-brassinolide, soit à des graines de tomate par immersion, soit aux racines par arrosage.

14. La méthode selon la revendication 9 dans laquelle la plante traitée est une céréale du groupe du riz, du blé, de l'orge et du maïs; du soja; de la betterave; une plante à tubercules ou bulbes souterrains du groupe de l'oignon, de l'ail et de la pomme de terre; un légume du groupe de la tomate, du concombre, de la laitue, du chou, du chou-fleur, de l'épinard et de la carotte; un fruit de groupe de la pêche, de la figue, du raisin et de la pomme; ou une fleur du groupe de la tulipe et du cosmos.

15. La méthode selon la revendication 9 dans laquelle la plante à traiter est choisie parmi le riz, le blé, le maïs et le soja.

16. L'emploi d'un 24-épi-brassinolide et d'un sel non-toxique de choline pour accroître la quantité et améliorer la qualité de fruits ou de fleurs de plantes en horticulture et en agriculture.